# EUROPÄISCHE PATENTANMELDUNG

(11) **EP 0 527 456 A1**
(43) Veröffentlichungstag der Anmeldung: **17.02.1993**
(21) Anmeldenummer: 92113550.5
(22) Anmeldetag: 08.08.1992
(51) Int. Cl.: B65D 19/44

(54) **Platte zum lagesicheren Halten eines Aufsatzes auf einer Mehrweg-Palette**

(30) Priorität: 22.02.1992 EP 92103019; 30.03.1992 EP 92105420; 09.08.1991 DE 9109872 U
(71) Anmelder: Gustav Stabernack GmbH, D-36339 Lauterbach (DE)
(72) Erfinder: Listmann, Herbert, W-6420 Lauterbach-Frischborn (DE); Schmidt, Norbert, W-6420 Lauterbach-Frischborn (DE)
(74) Vertreter: Gudel, Diether (DE)

(57) **Zusammenfassung**

Platte (1) aus Faltmaterial zum lagesicheren Halten eines Aufsatzes auf einer Mehrweg-Palette, die von der Oberseite her frei zugängliche Aufnahmen hat, mit Füßen an der Unterseite der Platte (1), die in die Aufnahmen der Palette eingreifen und die die Platte (1) an der Palette fixieren.

Erfindungsgemäß können die Füße maschinell vorgeklebt werden, weil sie durch Schnitte (2) im Material der Platte (1) gebildet sind, die bis zum Rand der Platte (1) geführt sind.

## Beschreibung

Mehrweg-Paletten bestehen aus hartem Material, üblicherweise aus Kunststoffmaterial, damit sie mehrfach verwendet werden können. Üblicherweise wird auf eine Mehrweg-Palette ein Warenbehälter aufgesetzt, aus dem die Waren in einem Ladengeschäft abverkauft werden können.

Bei Mehrweg-Paletten besteht das Problem, den zugehörigen Aufsatz (Warenbehälter) lagesicher auf der Palette zu halten. Dabei soll der Aufsatz von der Palette ggfs. leicht getrennt werden können, damit die Palette wieder verwendet werden kann.

Hierzu ist es bekannt, Fortsätze an der Unterseite des aus Faltmaterial bestehenden Aufsatzes von oben in entsprechende Schlitze in der Kunststoffpalette einzusetzen. Für diese Fixierung sind aber Paletten mit Schlitzen Voraussetzung, was nicht immer gegeben ist. Außerdem ist das Einsetzen des ja mit Waren bestückten Aufsatzes in die Schlitze schwierig, weil die relativ engen Schlitze genau getroffen werden müssen. Schließlich ist diese Verbindung auch nicht belastbar genug.

Grundsätzlich wäre es zwar möglich, den Aufsatz an die Palette anzukleben, anzuklammern oder anzutackern, jedoch wird eine derart benutzte Palette dann nicht mehr vom Hersteller zurückgenommen, was also für den Kunden wesentliche preisliche Nachteile mit sich bringt.

Die Entwicklung derartiger sogenannter Adapterplatten hat nach Kenntnis der Anmelderin folgenden Weg genommen: Mit der deutschen Gebrauchsmusterschrift G 91 09 872.6 vom 9. August 1991 wird grundsätzlich der Gedanke vorgeschlagen, zu dem hier in Rede stehenden Zweck derartige Platten aus Faltmaterial vorzusehen. Diese Adapterplatten sind ohne weiteres mit herkömmlichen Maschinen nicht maschinell vorklebbar.

Weiterbildungen dieses Grundgedankens schlägt die europäische Patentanmeldung 92 103 019.3 vom 22. Februar 1992 vor. Auch hier können die Füße nicht ohne weiteres mit heute auf dem Markt befindlichen Maschinen vorgeklebt werden.

Eine Alternative derartiger Adapterplatten beschreibt im übrigen die europäische Patentanmeldung 92 105 420.1 der Anmelderin vom 30. März 1992.

Es werden die Prioritäten aller drei vorstehend genannten Schutzrechtsanmeldungen für die vorstehende Erfindung beansprucht, so daß diese drei älteren Schutzrechtsanmeldungen nicht zum Stand der Technik gehören.

Der Erfindung liegt somit die Aufgabe zugrunde, die Nachteile der bekannten Systeme zu vermeiden und Mittel vorzuschlagen, mit denen ein Aufsatz bei einfacher Handhabung auf einer Mehrweg-Palette lagesicher aufgesetzt und gehalten werden kann. Unter einem derartigen Aufsatz kann man die verschiedensten Gegenstände verstehen, beispielsweise einen Bodenaufsteller in einem Ladengeschäft, einen Container, ein Stapeltray, eine Schütte und andere Gegenstände zum Abverkauf von Waren und auch zu anderen Zwecken.

Die Füße der Adapterplatte sollen außerdem maschinell vorgeklebt werden können.

Die Lösung der Erfindungsaufgabe erfolgt durch eine Platte aus Faltmaterial zum lagesicheren Halten eines Aufsatzes auf einer Mehrweg-Palette, die von der Oberseite her frei zugängliche Aufnahmen hat, mit Füßen an der Unterseite der Platte, die in die Aufnahmen der Palette eingreifen und die die Platte an der Palette fixieren, wobei die Füße aus dem Material der Platte durch vom Rand der Platte ausgehende Schnitte gebildet sind, über Faltlinien an die Platte angelenkt sind und vorzugsweise an ihren Enden Klebelaschen haben, mit denen sie an der Platte befestigt sind.

Es ist also ein gesondertes Bauteil, nämlich die Platte (Adapterplatte) mit ihren Füßen vorgesehen, das den jeweiligen Anforderungen, insbesondere in Bezug auf die Abmessungen der Palette und ihrer Aufnahmen, gut angepaßt werden kann. Weil die Platte aus Faltmaterial (Wellpappe, Karton oder dgl.) besteht, kann sie ggfs. nach mehrfacher Verwendung, gut entsorgt werden.

Weil die Füße aus dem Material der Platte durch vom Rand der Platte ausgehende Schnitte gebildet sind, über Faltlinien an die Platte angelenkt sind und Klebelaschen haben, mit denen sie an der Platte befestigt sind, können die Füße oder Fortsätze mit handelsüblichen Maschinen vorgeklebt werden. In diesem vorgeklebten Zustand können sie vom Kunden aufgefaltet und in die Gebrauchslage gebracht werden, so daß sie mit wenigen Handgriffen mit ihren Füßen in die von oben frei zugänglichen Aufnahmen an der Mehrweg-Palette eingedrückt und somit an der Palette arretiert werden können.

Bevorzugt wird eine U-Form der Füße. Denkbar sind aber auch andere, mehrkantige Profilformen, beispielsweise eine Dreiecksform (V-Form) usf.

Sofern der Aufsatz der Palette einen Sockel hat, wird es bevorzugt, wenn die Abmessungen der Platte den Innenmaßen des Sockels entsprechen. Dadurch wird eine zusätzliche Arretierung des Aufsatzes über seinen Sockel an der Platte und damit auch an der Mehrweg-Palette erreicht, weil durch diese Maßnahmen ein seitliches Verrutschen der Teile zueinander zusätzlich ausgeschlossen wird.

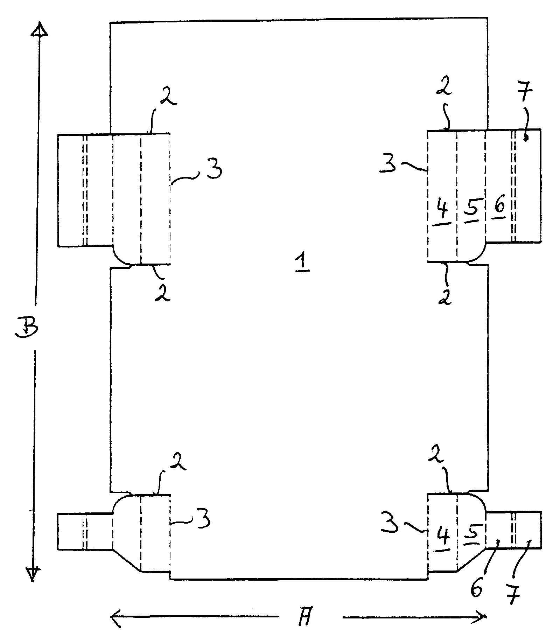

Die Erfindung wird im folgenden anhand eines Ausführungsbeispieles näher erläutert, aus dem sich weitere wichtige Merkmale ergeben. Die Figur zeigt einen flach gefalteten Zuschnitt zur Herstellung einer erfindungsgemäßen Platte.

Der Zuschnitt besteht aus geeignetem Faltmaterial, vorzugsweise Karton, Wellpappe oder dergleichen. Er ist grundsätzlich als Platte 1 ausgebildet, die beim gezeigten Ausführungsbeispiel eine Rechteckform hat. Die Abmessungen A und B der Platte 1 entsprechen den Innenmaßen eines Sockels eines Aufsatzes, der an einer - zeichnerisch nicht dargestellten Mehrweg-Palette (sogenannte Chep-Palette) lagesicher befestigt werden soll.

Aus dem Material der Platte 1 sind Füße an Orten aufgefaltet, die den vorbestimmten Plätzen von von oben frei zugänglichen Aufnahmen in der Mehrweg-Palette entsprechen. Die Füße der Platte entsprechen auch in ihren Abmessungen den Innenabmessungen dieser Aufnahmen der Palette, so daß die aufgefalteten Füße von oben in die Aufnahmen der Palette eingedrückt werden können und dadurch die Platte an der Palette fixieren.

Die Füße werden durch zum Rand der Platte gehende Schnittlinien 2 gebildet, die sich im wesentlichen rechtwinklig zu den Kanten der Platte erstrecken. Nach innen wird das Material der Füße durch Faltlinien 3 begrenzt und über diese Faltlinien sind die Füße an die Platte 1 angelenkt. Die Faltlinie 3 erstreckt sich rechtwinklig zu den Schnittlinien 2.

Jeder Fuß besteht aus mehreren, aneinander jeweils über Faltlinien angelenkten Feldern, nämlich den Feldern 4, 5, 6 und 7 in dieser Reihenfolge. Das erste Feld 4 wird rechtwinklig zur Platte 1 nach oben aufgefaltet. Das zweite Feld 5 dazu rechtwinklig nach innen abgebogen in eine Lage parallel zur Platte 1. Das dritte Feld 6 wird zum Feld 5 wiederum rechtwinklig nach unten abgebogen, so daß es sich parallel zum ersten Feld 4 und rechtwinklig zur Platte 1 erstreckt. Das letzte Feld 7 ist als Klebefeld ausgebildet und wird wiederum rechtwinklig zum Feld 6 nach außen abgebogen, so daß es auf der Platte 1 aufliegt und dort wird es mit dem Material der Platte 1 verklebt.

Jeder Fuß hat also ein U-Profil, gebildet von den Feldern 4, 5 und 6 und daran schließt sich nach innen das Klebefeld 7 an.

Weil das Material der Füße von außen nach innen gefaltet wird, ist ein maschinelles Vorkleben der Adapterplatte möglich. Die Adapterplatte kann mit flach gefalteten Füßen platzsparend versandt werden und beim Kunden müssen die Füße nur noch in ihre Gebrauchsform aufgerichtet werden.

Die Adapterplatte wird sehr sicher an der Palette arretiert, weil hierzu insgesamt vier der Füße vorgesehen sind. Allerdings läßt sich derselbe Zweck auch erzielen, wenn man weniger Füße nimmt, beispielsweise nur zwei oder drei der Füße.

Jeder Fuß hat zwei Anlageschultern, die durch die beiden Felder 4 und 6 gebildet werden und mit diesen beiden Anlageschultern legt sich jeder Fuß an die entsprechenden Innenwände der betreffenden Aufnahme der Mehrweg-Palette an. Auch entspricht die Länge jedes Fußes den entsprechenden Innenabmessungen der betreffenden Paletten-Aufnahme.

## Patentansprüche

1. Platte (1) aus Faltmaterial zum lagesicheren Halten eines Aufsatzes auf einer Mehrweg-Palette, die von der Oberseite her frei zugängliche Aufnahmen hat, mit Füßen an der Unterseite der Platte (1), die in die Aufnahmen der Palette eingreifen und die die Platte (1) an der Palette fixieren, wobei die Füße aus dem Material der Platte (1) durch vom Rand der Platte (1) ausgehende Schnitte (2) gebildet sind, über Faltlinien (3) an die Platte (1) angelenkt sind und Klebelaschen (7) haben, mit denen sie an der Platte (1) befestigt sind.

2. Platte nach Anspruch 1,
**dadurch gekennzeichnet**,
daß die Füße U-förmig sind.

3. Platte nach Anspruch 1 oder Anspruch 2,
**dadurch gekennzeichnet**,
daß die Abmessungen der Platte (1) den Innenmaßen eines Sockels des Aufsatzes entsprechen.
